# FASCICULE DE BREVET EUROPEEN

(11) **EP 3 172 062 B1**
(45) Date de publication et mention de la délivrance du brevet: **12.09.2018**
(21) Numéro de dépôt: 15738042.9
(22) Date de dépôt: 09.07.2015
(51) Int. Cl.: B60C 1/00, C08K 3/04, C08K 3/36, C08L 23/16, C08K 5/548

(54) **PNEUMATIQUE POUR AVION**
FLUGZEUGREIFEN
AIRCRAFT TYRE

(30) Priorité: 22.07.2014 FR 1457052
(43) Date de publication de la demande: 31.05.2017
(73) Titulaire: Compagnie Générale des Etablissements Michelin, 63000 Clermont-Ferrand (FR)
(72) Inventeur: ARAUJO DA SILVA, José, Carlos, F-63040 Clermont-Ferrand Cedex 9 (FR); TRIGUEL, Aurélie, F-63040 Clermont-Ferrand Cedex 9 (FR)
(74) Mandataire: Gandon-Pain, Sylvie
(86) Numéro de dépôt international: PCT/EP2015/065760
(87) Numéro de publication internationale: WO 2016/012261

(56) Documents cités:
- EP-A2- 0 240 448
- WO-A1-2011/078859
- FR-A1- 2 989 633
- US-A1- 2002 061 979
- US-A1- 2004 023 002

## Description

La présente invention est relative aux pneumatiques destinés à équiper des avions.

De manière connue, un pneumatique pour avion doit résister à des conditions de pression, de charge et de vitesse élevées. De plus il doit satisfaire également des exigences de résistance à l'usure et d'endurance. Par endurance, on entend l'aptitude du pneumatique à résister au cours du temps aux sollicitations cycliques auxquelles il est soumis. Lorsque la bande de roulement d'un pneumatique d'avion est usée, ce qui marque la fin d'une première vie d'utilisation, le pneumatique est rechapé, c'est-à-dire que la bande de roulement usée est remplacée par une nouvelle bande de roulement pour permettre une deuxième vie d'utilisation. Une résistance à l'usure améliorée permet d'effectuer un plus grand nombre d'atterrissages par vie d'utilisation. Une endurance améliorée permet d'augmenter le nombre de vies d'utilisation d'un même pneumatique.

Il est connu d'utiliser dans les bandes de roulement de pneumatique d'avion, des compositions de caoutchouc à base de caoutchouc naturel et de noir de carbone, ces deux éléments principaux permettant d'obtenir des compositions possédant des propriétés compatibles avec les conditions d'usage d'un pneumatique d'avion. En plus de ces éléments principaux, ces compositions comprennent les additifs usuels de ce type de compositions tels qu'un système de vulcanisation et des agents de protections.

De telles compositions de bande de roulement de pneumatique d'avion sont utilisées depuis de nombreuses années et présentent des propriétés mécaniques leur permettant de résister aux conditions d'usure très particulières des pneumatiques d'avion. En effet ces pneumatiques sont soumis à de très grandes variations de température et de vitesse, en particulier à l'atterrissage où ils doivent passer d'une vitesse nulle à une très grande vitesse, provoquant un échauffement et une usure considérables.

Il est donc toujours intéressant pour les industriels des pneumatiques d'avion de trouver des solutions plus performantes et plus résistantes, notamment plus résistantes aux conditions extrêmes d'usure engendrée à l'atterrissage des avions. Une étude (S. K. Clark « Touchdown dynamics », Precision Measurement Company, Ann Arbor, MI, NASA, Langley Research Center, Computational Modeling of Tires pages 9-19 publié en août 1995) a décrit les sollicitations auxquelles sont soumis les pneumatiques d'avion à l'atterrissage et proposé une méthode d'évaluation des performances des pneumatiques d'avion lors de ces sollicitations.
Lors de leurs recherches, les Demanderesses ont trouvé qu'une composition particulière des bandes de roulement de pneumatique d'avion pouvait améliorer les propriétés des pneumatiques d'avion, en particulier pour la phase d'atterrissage de ces pneumatiques.

En conséquence, l'invention concerne un pneumatique pour avion dont la bande de roulement comprend une composition de caoutchouc à base d'au moins un premier élastomère diénique, une charge renforçante et un système de réticulation, lequel premier élastomère diénique est un terpolymère d'éthylène, d'une α-oléfine et d'un diène non conjugué.

### I. DESCRIPTION DETAILLEE DE L'INVENTION :

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

De façon générale, un pneumatique comprend une bande de roulement, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique pour avion comprend généralement une pluralité de couches de carcasse s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Les éléments de renforcement des couches de carcasse sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

En utilisation, un pneumatique pour avion est soumis à une combinaison de charge et de pression induisant un taux de flexion élevé, typiquement supérieur à 30% (par exemple à 32% ou 35%). Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique pour avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Avec les matériaux textiles couramment utilisés pour les éléments de renforcement, tels que les polyamides aliphatiques ou les polyamides aromatiques, l'armature de carcasse peut, par exemple, comprendre au moins 5 couches de carcasse.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Ainsi, le pneumatique pour avion selon l'invention est préférentiellement un pneumatique pour avion qui est soumis lors de son utilisation à une combinaison de charge et de pression induisant un taux de flexion supérieur à 30.

De même, le pneumatique pour avion selon l'invention est préférentiellement un pneumatique pour avion comprenant en plus de la bande de roulement, une structure interne comprenant une pluralité de couches de carcasse s'étendant entre les deux bourrelets et réparties entre une première et une deuxième famille, la première famille étant constituée par des couches de carcasse, s'enroulant, dans chaque bourrelet, de l'intérieur vers l'extérieur du pneumatique et la deuxième famille étant constituée par des couches de carcasse s'étendant, dans chaque bourrelet, de l'extérieur vers l'intérieur du pneumatique.

La composition de la bande de roulement des pneumatiques pour avion selon l'invention comprend un terpolymère d'éthylène, d'une α-oléfine et d'un diène non conjugué.

L'a-oléfine peut être un mélange d'alpha oléfines. L'a-oléfine comprend généralement 3 à 16 atomes de carbone. Conviennent comme α-oléfine par exemple le propylène, le 1-butène, le 1-pentène, le 1-hexène, le 1-octène et le 1-dodécène. Avantageusement, l'a-oléfine est le propylène, auquel cas le terpolymère est appelé communément un EPDM (en anglais « EPDM rubber »).

Le diène non conjugué comprend généralement 6 à 12 atomes de carbone. A titre de diène non conjugué, on peut citer le dicyclopentadiène, le 1,4-hexadiène, le 5-éthylidène-2-norbornène, le 5-méthylène-2-norbornène, le 1,5-cyclooctadiène. Avantageusement, le diène non conjugué est le 5-éthylidène-2-norbornène.

Selon un mode de réalisation de l'invention, le premier élastomère diénique présente au moins l'une des caractéristiques suivantes, de préférence toutes :
- les unités éthylène représentent entre 20 et 90%, préférentiellement entre 30 et 70% en masse du premier élastomère diénique,
- les unités α-oléfine représentent entre 10 et 80%, préférentiellement de 15 à 70% en masse du premier élastomère diénique,
- les unités diène non conjugué représentent entre 0.5 et 20% en masse du premier élastomère diénique.

Le premier élastomère diénique présente de préférence une masse molaire moyenne en poids (Mw) d'au moins 60 000 g/mol et d'au plus 1 500 000 g/mol, de préférence d'au moins 100 000 g/mol et d'au plus 700 000 g/mol. Les valeurs de Mw sont mesurées selon la méthode SEC décrite dans le paragraphe II.1-a).

Il est entendu que le premier élastomère diénique peut être constitué par un mélange de terpolymères d'éthylène, α-oléfine et de diène non conjugué qui se différencient des uns des autres par leur macrostructure ou leur microstructure, en particulier par le taux massique respectif des unités éthylène, α-oléfine et diène non conjugué.

Selon un mode de réalisation de l'invention, le premier élastomère diénique est le seul élastomère de la composition de caoutchouc.

Selon un mode de réalisation particulier de l'invention, la composition de caoutchouc comprend en outre un second élastomère, de préférence diénique, c'est-à-dire comprenant des unités monomères diéniques. Lorsque la composition de caoutchouc comprend un second élastomère, elle comprend de préférence plus de 50 pce, de manière plus préférentielle plus de 60 pce du premier élastomère diénique.

Le deuxième élastomère peut être un élastomère diénique "essentiellement insaturé" ou "essentiellement saturé". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, le second élastomère diénique susceptible d'être utilisé dans les compositions conformes à l'invention peut être:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone ;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère oléfinique insaturé dont la chaine comporte au moins des unités monomères oléfiniques, c'est à dire des unités issues de l'insertion d'au moins une α-oléfine ou l'éthylène, et des unités monomères diéniques issues d'au moins un diène conjugué.

Le second élastomère est de préférence un élastomère diénique choisi dans le groupe des élastomères diéniques « fortement insaturés » constitué par les polybutadiènes, les polyisoprènes, les copolymères de butadiène, les copolymères d'isoprène et les mélanges de ces élastomères. Les polyisoprènes peuvent être de synthèse (IR) ou le caoutchouc naturel (NR). Il est entendu que le second élastomère diénique peut être constitué par un mélange d'élastomères diéniques qui se différencient des uns des autres par leur microstructure, par leur macrostructure ou par la présence d'une fonction, par la nature ou la position de cette dernière sur la chaîne élastomère.

La charge renforçante, connue pour ses capacités à renforcer une composition de caoutchouc utilisable pour la fabrication de pneumatiques, peut être un noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le noir de carbone présente une surface spécifique BET de préférence d'au moins 90 m²/g, de manière plus préférentielle d'au moins 100 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. Les noirs de carbone peuvent être utilisés à l'état isolé, tels que disponibles commercialement, ou sous tout autre forme, par exemple comme support de certains des additifs de caoutchouterie utilisés. La surface spécifique BET des noirs de carbone est mesurée selon la norme D6556-10 [méthode multipoints (au minimum 5 points) - gaz : azote - domaine de pression relative P/P0 : 0.1 à 0.3].

Selon un mode de réalisation de l'invention, la charge renforçante comprend aussi une charge inorganique renforçante. Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Conviennent en particulier, sans que la définition ci-après soit limitative, des silanes polysulfurés répondant à la formule générale (I) suivante:

(I) Z-A-Sₓ-A-Z,

dans laquelle:
- x est un entier de 2 à 8 (de préférence de 2 à 5) ;
- les symboles A, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 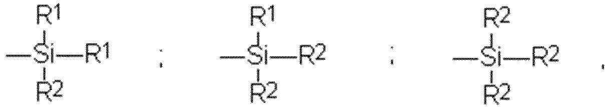 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.
A titre d'exemples d'autres organosilanes, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 9 pce, plus préférentiellement compris dans un domaine allant de 3 à 9 pce. Ce taux est aisément ajusté par l'homme du métier selon le taux de charge inorganique utilisé dans la composition.

Selon un mode de réalisation préférentiel de l'invention, la charge renforçante est constituée à 100% en masse de noir de carbone.

Selon un autre mode de réalisation de l'invention, le taux de charge renforçante est compris dans un domaine allant de 20 à 70 pce, de préférence de 25 à 50 pce.

Le système de réticulation peut être à base soit de soufre, soit de donneurs de soufre et/ou de peroxyde et/ou de bismaléimides. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc peut comporter également tout ou partie des additifs usuels habituellement utilisés dans les compositions d'élastomères destinées à constituer des bandes de roulement, comme par exemple des plastifiants, des pigments, des agents de protection tels que cires anti-ozone, anti-ozonants chimiques, anti-oxydants, des agents anti-fatigue.

Selon un mode de réalisation préférentiel de l'invention, la composition de caoutchouc contient de 0 à 20 pce d'un plastifiant liquide, de préférence elle est dépourvue de tout plastifiant liquide.

Un plastifiant est considéré comme liquide lorsque, à 23°C, il a la capacité de prendre à terme la forme de son contenant, cette définition étant donnée par opposition aux résines plastifiantes qui sont par nature solides à température ambiante. Comme plastifiant liquide, on peut citer les huiles végétales, les huiles minérales, les plastifiants éthers, esters, phosphates, sulfonates et leurs mélanges.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

La composition de caoutchouc conforme à l'invention, peut être soit à l'état cru (avant réticulation ou vulcanisation), soit à l'état cuit (après réticulation ou vulcanisation), peut être un produit semi-fini qui peut être utilisé dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION :

### II.1-Mesures et tests utilisés :

### II.1-a) Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».
Les masses molaires moyennes calculées sont relatives à une courbe d'étalonnage réalisée à partir de polystyrènes étalons commerciaux « PSS READY CAL-KIT ».

### II.1-b) Perte de masse

Cet essai permet de déterminer la perte de masse d'un échantillon de composition de bande de roulement de pneumatique pour avion, lorsqu'il est soumis à un test d'abrasion sur un abrasimètre à haute vitesse.
Le test d'abrasion à haute vitesse est réalisé selon le principe décrit dans l'article de S. K. Clark « Touchdown dynamics », Precision Measurement Company, Ann Arbor, MI, NASA, Langley Research Center, Computational Modeling of Tires pages 9-19 publié en août 1995. Le matériau de bande de roulement frotte sur une surface telle qu'un disque Norton Vulcan A30S-BF42. La vitesse linéaire lors du contact est de 70 m/s avec une pression moyenne de contact de 15 à 20 bars. Le dispositif est conçu pour frotter jusqu'à épuisement d'une l'énergie de 10 à 20 MJ/m² de surface de contact.

Les éléments du dispositif de tribométrie à énergie constante selon l'article de S.K. Clark mentionné ci-dessus sont un moteur, un embrayage, un plateau tournant et un porte échantillon.
La performance est évaluée sur la base de la perte de masse selon la formule suivante : Performance perte de masse = perte de masse témoin / perte de masse échantillon. Les résultats sont exprimés en base 100. Une performance pour l'échantillon supérieure à 100 est considérée comme meilleure que le témoin.

### II.1-c) Rhéométrie :

Les mesures sont effectuées à 150°C avec un rhéomètre à chambre oscillante, selon la norme DIN 53529 - partie 3 (juin 1983). L'évolution du couple rhéométrique, ΔCouple (en dN.m), en fonction du temps décrit l'évolution de la rigidification de la composition par suite de la réaction de vulcanisation. Les mesures sont traitées selon la norme DIN 53529 - partie 2 (mars 1983) : T₀ est le délai d'induction, c'est-à-dire le temps nécessaire au début de la réaction de vulcanisation ; T_{α} (par exemple T₉₉) est le temps nécessaire pour atteindre une conversion de α%, c'est-à-dire α% (par exemple 99%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### II.1-d) Essais de traction :

Ces essais de traction permettent de déterminer les modules d'élasticité et les propriétés à la rupture et sont basées sur la norme NF ISO 37 de Décembre 2005 sur une éprouvette haltère de type 2. L'allongement rupture ainsi mesuré à 23°C est exprimé en % d'allongement.

### II.2-Préparation des compositions et leurs propriétés à cuit :

Les compositions, en l'espèce C1 à C24, T1 et T2 dont la formulation en pce figure dans les tableaux 1, 2, 4 à 7 sont préparées de la manière suivante :
On introduit dans un mélangeur interne (taux de remplissage final : environ 70% en volume), dont la température initiale de cuve est d'environ 80°C, successivement les élastomères diéniques, les charges renforçantes, ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 70 °C, en mélangeant le tout (phase productive) pendant un temps approprié (par exemple une dizaine de minutes).
Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement de pneumatique avion.

T1 et T2 sont deux compositions témoin. T1 correspond à la composition d'une bande de roulement pour avion conventionnellement utilisée par l'homme du métier pour fabriquer une bande de roulement de pneumatique avion ; elle est à base de caoutchouc naturel. T2 contient également du caoutchouc naturel, mais le taux de charge et le système de vulcanisation diffèrent de la composition témoin T1.

Les essais C1 à C24 sont conformes à l'invention, puisque les compositions correspondant à ces essais contiennent un EPDM, éventuellement un élastomère diénique fortement insaturé (différents taux illustrés), une charge renforçante (noir de carbone ou silice à différents taux illustrés) et un système de réticulation. Elles diffèrent par la microstructure ou la macrostructure de l'EPDM, le taux respectif en EPDM et en élastomère diénique fortement insaturé, par la nature et le taux de charge renforçante, silice ou noir de carbone, ou du système de réticulation, soufre ou peroxyde.

### Essai 1 :

Cet essai a pour but de montrer l'influence du taux d'EPDM dans la composition de caoutchouc sur les propriétés à cuit de la composition de caoutchouc.

**Tableau 1**

| | T2 | C1 | C2 | C3 | C4 | C5 |
|---|---|---|---|---|---|---|
| NR (1) | 100 | - | 10 | 20 | 40 | 60 |
| EPDM 1 (2) | - | 100 | 90 | 80 | 60 | 40 |
| Noir de carbone (3) | 30 | 30 | 30 | 30 | 30 | 30 |
| Antioxydant (4) | 1,5 | 1,5 | 1,5 | 1,5 | 1,5 | 1,5 |
| Acide stéarique (5) | 2,5 | 2,5 | 2,5 | 2,5 | 2,5 | 2,5 |
| Oxyde de Zinc (6) | 3 | 3 | 3 | 3 | 3 | 3 |
| Accélérateur (7) | 2 | 2 | 2 | 2 | 2 | 2 |
| Soufre | 0,8 | 0,8 | 0,8 | 0,8 | 0,8 | 0,8 |
| Allongement Rupture à 23°C (%) | 528 | 634 | 664 | 658 | 560 | 465 |
| Performance perte de masse (%) | 100 | 173 | 146 | 132 | 123 | 119 |

| | | | | | | |
|---|---|---|---|---|---|---|
| (1) Caoutchouc naturel (2) EPDM Nordel IP 4570 de la Société Dow (3) Noir de carbone de grade N234 selon la norme ASTM D-1765 (4) N-1,3-diméthylbutyl-N-phénylparaphénylènediamine « Santoflex 6-PPD » de la société Flexsys (5) Stéarine « Pristerene 4931 » de la société Uniqema (6) Oxyde de zinc de grade industriel de la société Umicore (7) N-cyclohexyl-2-benzothiazyle sulfénamide « Santocure CBS » de la société Flexsys | | | | | | |

Le résultat de cet essai montre que la performance perte de masse est toujours améliorée par rapport au témoin T2. Par contre, en dessous d'un taux d'EPDM de 50 pce, on observe une déchéance des propriétés mécaniques, au regard du niveau de l'allongement rupture. Ainsi, l'invention a pour avantage de permettre une meilleure performance perte de masse, représentative d'une meilleure résistance à l'usure lors de la phase d'atterrissage de l'avion. On observe que l'utilisation de plus de 50 pce d'EPDM dans la composition de caoutchouc conduit à un meilleur compromis de performance entre la perte de masse et l'allongement rupture.

### Essai 2 :

Cet essai a pour but de montrer l'influence de la macrostructure de l'EPDM et de sa microstructure. En particulier a été étudiée l'influence du taux d'unité éthylène dans l'EPDM ainsi que l'influence des unités diène non conjugué. Les caractéristiques des EPDM utilisés dans cet essai figurent dans le tableau 3, les taux d'unité monomère sont des taux massiques pour 100 g d'EPDM.

**Tableau 2**

| | T1 | C1 | C6 | C7 | C8 | C9 |
|---|---|---|---|---|---|---|
| NR (1) | 100 | - | | - | - | - |
| EPDM 1 (2) | - | 100 | - | - | - | - |
| EPDM 2 (3) | - | - | 100 | - | - | - |
| EPDM 3 (4) | - | - | - | 100 | - | - |
| EPDM 4 (5) | - | - | - | - | 100 | - |
| EPDM 5 (6) | - | - | - | - | - | 100 |
| Noir de carbone (7) | 47,5 | 30 | 30 | 30 | 30 | 30 |
| Antioxydant (8) | 1,5 | 1,5 | 1,5 | 1,5 | 1,5 | 1,5 |
| Acide stéarique (9) | 2,5 | 2,5 | 2,5 | 2,5 | 2,5 | 2,5 |
| Oxyde de Zinc (10) | 3 | 3 | 3 | 3 | 3 | 3 |
| Accélérateur (11) | 0,8 | 2 | 2 | 2 | 2 | 2 |
| Soufre | 1,5 | 0,8 | 0,8 | 0,8 | 0,8 | 0,8 |
| Performance perte de masse (%) | 100 | 195 | 197 | 173 | 130 | 183 |

| | | | | | | |
|---|---|---|---|---|---|---|
| (1) Caoutchouc naturel (2) EPDM « Nordel IP 4570 » de la Société Dow (3) EPDM « Keltan 9950 » de la Société Lanxess (4) EPDM « 9090M » de la Société Mitsui (5) EPDM « Keltan 4460D » de la Société Lanxess (6) EPDM « Nordel IP 4770R » de la Société Dow (7) Noir de carbone de grade N234 selon la norme ASTM D-1765 (8) N-1,3-diméthylbutyl-N-phénylparaphénylènediamine « Santoflex 6-PPD » de la société Flexsys (9) Stéarine « Pristerene 4931 » de la société Uniqema (10) Oxyde de zinc de grade industriel de la société Umicore (11) N-cyclohexyl-2-benzothiazyle sulfénamide « Santocure CBS » de la société Flexsys | | | | | | |

**Tableau 3**

| EPDM | Ethylène | Nature diène | Diène | Mw* (g/mol) |
|---|---|---|---|---|
| EPDM 1 | 50 | ENB | 4,9 | 390000 |
| EPDM 2 | 48 | ENB | 9 | 498000 |
| EPDM 3 | 41 | ENB | 14 | 442000 |
| EPDM 4 | 58 | DCPD | 4,5 | 230000 |
| EPDM 5 | 70 | ENB | 4,9 | NM** |

| | | | | |
|---|---|---|---|---|
| ENB : 5-éthylidène-2-norbornène DCPD : dicyclopentadiène * Méthode SEC décrite dans le paragraphe II.1-a) ** Non mesuré. | | | | |

Le résultat de cet essai montre que la performance perte de masse est toujours améliorée par rapport au témoin.
A taux d'éthylène sensiblement égal, l'effet de la nature du diène non conjugué a été étudié. La performance des matériaux correspondants, c'est-à-dire les compositions C1 et C8 conformes à l'invention, reste supérieure au témoin. On observe que les EPDM dont le diène non conjugué est l'ENB donnent les meilleurs résultats.
A taux d'éthylène sensiblement égal, l'augmentation du taux d'unité diène non conjugué dans l'EPDM induit un effet très faible sur la performance perte de masse, au regard des performances des compositions C1, C6 et C7. En effet, un taux d'unité diène non conjugué de 5% conduit à la même performance perte de masse qu'un taux de 9% alors qu'un taux de 14% entraine seulement une très légère diminution de la performance perte de masse. Enfin, l'augmentation du taux d'unité éthylène dans l'EPDM a un effet très faible sur la performance perte de masse, au regard des performances des compositions C1, C7 et C9. La performance est toujours améliorée par rapport au témoin.

### Essai 3 :

Cet essai a pour but de montrer l'influence du système de réticulation.

**Tableau 4**

| | T1 | C1 | C10 | C11 | C12 |
|---|---|---|---|---|---|
| NR (1) | 100 | - | - | - | - |
| EPDM 1 (2) | - | 100 | 100 | 100 | 100 |
| Noir de carbone (3) | 47,5 | 30 | 30 | 30 | 30 |
| Antioxydant (4) | 1,5 | 1,5 | 1,5 | 1,5 | 1,5 |
| Acide stéarique (5) | 2,5 | 2,5 | 2,5 | 2,5 | 2,5 |
| Oxyde de Zinc (6) | 3 | 3 | 3 | 3 | 3 |
| Accélérateur (7) | 0,8 | 2 | 0,8 | 2 | 2 |
| Peroxyde (8) | - | - | - | - | 3,2 |
| Ultra Accélérateur (9) | - | - | - | 1,5 | - |
| Soufre | 1,5 | 0,8 | 1,5 | 1 | 1 |
| Cuisson T₉₉ (min) | 15 | 36 | 80 | 18 | 51 |
| Cuisson K (min⁻¹) | 0,56 | 0,15 | 0,07 | 0,30 | 0,10 |
| Performance perte de masse (%) | 100 | 195 | 189 | 216 | 210 |

| | | | | | |
|---|---|---|---|---|---|
| (1) Caoutchouc naturel (2) EPDM « Nordel IP 4570 » de la Société Dow (3) Noir de carbone de grade N234 selon la norme ASTM D-1765 (4) N-1,3-diméthylbutyl-N-phénylparaphénylènediamine « Santoflex 6-PPD » de la société Flexsys (5) Stéarine « Pristerene 4931 » de la société Uniqema (6) Oxyde de zinc de grade industriel de la société Umicore (7) N-cyclohexyl-2-benzothiazyle sulfénamide « Santocure CBS » de la société Flexsys (8) Dicumyl peroxyde « Lupérox » de la société Archema (9) « Dibenzyldithiocarbamate de Zinc » de la société Flexsys | | | | | |

Le résultat de cet essai montre que la performance perte de masse est toujours améliorée par rapport au témoin. Divers systèmes de vulcanisation peuvent être utilisés, ce qui permet d'ajuster le T₉₉ par exemple, pour se rapprocher des temps de cuisson d'un mélange témoin, et ne pas être pénalisé en terme de productivité industrielle.

### Essai 4 :

Cet essai a pour but de montrer l'influence du taux de plastifiant liquide dans la composition de caoutchouc.

**Tableau 5**

| | T2 | C1 | C13 | C14 |
|---|---|---|---|---|
| NR (1) | 100 | - | - | - |
| EPDM (2) | - | 100 | 100 | 100 |
| Plastifiant (3) | - | - | 9 | 20 |
| Noir de carbone (4) | 30 | 30 | 32,5 | 35,7 |
| Antioxydant (5) | 1,5 | 1,5 | 1,5 | 1,5 |
| Acide stéarique (6) | 2,5 | 2,5 | 2,5 | 2,5 |
| Oxyde de Zinc (7) | 3 | 3 | 3 | 3 |
| Accélérateur (8) | 2 | 2 | 2 | 2 |
| Soufre | 0,8 | 0,8 | 0,8 | 0,8 |
| Performance perte de masse (%) | 100 | 173 | 164 | 155 |

**Tableau 6**

| | T1 | C15 | C16 | C17 |
|---|---|---|---|---|
| NR (1) | 100 | - | - | - |
| EPDM (2) | - | 100 | 100 | 100 |
| Plastifiant (3) | - | - | 9 | 20 |
| Noir de carbone (4) | 47,5 | 47,5 | 51,5 | 56,5 |
| Antioxydant (5) | 1,5 | 1,5 | 1,5 | 1,5 |
| Acide stéarique (6) | 2,5 | 2,5 | 2,5 | 2,5 |
| Oxyde de Zinc (7) | 3 | 3 | 3 | 3 |
| Accélérateur (8) | 0,8 | 2 | 2 | 2 |
| Soufre | 1,5 | 0,8 | 0,8 | 0,8 |
| Performance perte de masse (%) | 100 | 149 | 143 | 136 |

| | | | | |
|---|---|---|---|---|
| (1) Caoutchouc naturel (2) EPDM « Nordel IP 4570 » de la Société Dow (3) Huile Tudalen 1968 de la société Klaus Dahleke (4) Noir de carbone de grade N234 selon la norme ASTM D-1765 (5) N-1,3-diméthylbutyl-N-phénylparaphénylènediamine « Santoflex 6-PPD » de la société Flexsys (6) Stéarine « Pristerene 4931 » de la société Uniqema (7) Oxyde de zinc de grade industriel de la société Umicore (8) N-cyclohexyl-2-benzothiazyle sulfénamide « Santocure CBS » de la société Flexsys | | | | |

Les compositions C1, C13 et C14 de l'invention présentent un taux de dilution croissant, ainsi qu'un taux de charge croissant. Elles ont pour caractéristique de présenter la même fraction volumique de charge que la composition témoin T2. Il en va de même pour les compositions C15, C16 et C17, qui présentent la même fraction volumique de charge que la composition T1.
La performance perte de masse diminue avec l'augmentation du taux de dilution mais reste toujours supérieure au témoin. Cependant, l'homme de l'art comprend qu'au-delà de 20 pce de plastifiant, la rigidité est pénalisée. C'est pourquoi un taux de plastifiant liquide inférieur ou égal à 20 pce est préféré.

### Essai 5 :

Cet essai a pour but de montrer l'influence de la nature et du taux de charge renforçante dans la composition de caoutchouc.

**Tableau 7**

| | T1 | C1 | C15 | C18 | C19 | C20 | C21 | C22 | C23 | C24 |
|---|---|---|---|---|---|---|---|---|---|---|
| NR (1) | 100 | - | - | - | - | - | - | - | - | - |
| EPDM (2) | - | 100 | 100 | 100 | 100 | 100 | 100 | 100 | 100 | 100 |
| Noir de carbone 1 (3) | 47,5 | 30 | 47,5 | 70 | - | - | - | - | - | - |
| Noir de carbone 2 (4) | - | - | - | - | 30 | 47,5 | - | - | - | - |
| Noir de carbone 3 (5) | - | - | - | - | - | - | 30 | 47,5 | - | - |
| Silice (6) | - | - | - | - | - | - | - | - | 30 | 47,5 |
| Silane (7) | - | - | - | - | - | - | - | - | 2,4 | 3,8 |
| Antioxydant (8) | 1,5 | 1,5 | 1,5 | 1,5 | 1,5 | 1,5 | 1,5 | 1,5 | 1,5 | 1,5 |
| Acide stéarique (9) | 2,5 | 2,5 | 2,5 | 2,5 | 2,5 | 2,5 | 2,5 | 2,5 | 2,5 | 2,5 |
| Oxyde de Zinc (10) | 3 | 3 | 3 | 3 | 3 | 3 | 3 | 3 | 3 | 3 |
| Accélérateur (11) | 0,8 | 2 | 2 | 2 | 2 | 2 | 2 | 2 | 0,8 | 0,8 |
| Soufre | 1,5 | 0,8 | 0,8 | 0,8 | 0,8 | 0,8 | 0,8 | 0,8 | 1,5 | 1,5 |
| Performance perte de masse (%) | 100 | 195 | 149 | 112 | 184 | 151 | 182 | 153 | 157 | 126 |

| | | | | | | | | | | |
|---|---|---|---|---|---|---|---|---|---|---|
| (1) Caoutchouc naturel (2) EPDM « Nordel IP 4570 » de la Société Dow (3) Noir de carbone de grade N234 selon la norme ASTM D-1765 (4) Noir de carbone de grade N115 selon la norme ASTM D-1765 (5) Noir de carbone de grade N550 selon la norme ASTM D-1765 (6) Silice de grade 160MP (7) Silane liquide « Si69 » de la société Dégussa (8) N-1,3-diméthylbutyl-N-phénylparaphénylènediamine « Santoflex 6-PPD » de la société Flexsys (9) Stéarine « Pristerene 4931 » de la société Uniqema (10) Oxyde de zinc de grade industriel de la société Umicore (11) N-cyclohexyl-2-benzothiazyle sulfénamide « Santocure CBS » de la société Flexsys | | | | | | | | | | |

Le résultat de cet essai montre que la performance perte de masse est toujours améliorée par rapport au témoin. On observe aussi que le noir de carbone, notamment à un taux inférieur à 70 pce, conduit à un meilleur résultat que la silice.

En résumé, les compositions à base d'au moins un terpolymère d'éthylène, d'une α-oléfine et d'un diène non conjugué, une charge renforçante et un système de réticulation, qui sont constitutives des bandes de roulement de pneumatiques pour avion confèrent aux pneumatiques une performance à l'atterrissage fortement améliorée, notamment vis-à-vis de la résistance à l'usure à très haute vitesse.

## Revendications

1. Pneumatique pour avion dont la bande de roulement comprend une composition de caoutchouc à base d'au moins un premier élastomère diénique, une charge renforçante et un système de réticulation, lequel premier élastomère diénique est un terpolymère d'éthylène, d'une α-oléfine et d'un diène non conjugué.

2. Pneumatique selon la revendication 1 dans lequel l'α-oléfine est le propylène.

3. Pneumatique selon l'une quelconque des revendications 1 à 2 dans lequel le diène non conjugué est le 5-éthylidène-2-norbornène ou le dicyclopentadiène.

4. Pneumatique selon l'une quelconque des revendications 1 à 3 dans lequel le premier élastomère diénique présente au moins l'une des caractéristiques suivantes, de préférence toutes :
- les unités éthylène représentent entre 20 et 90%, préférentiellement entre 30 et 70% en masse du premier élastomère diénique,
- les unités α-oléfine représentent entre 10 et 80%, préférentiellement de 15 à 70% en masse du premier élastomère diénique,
- les unités diène non conjugué représentent entre 0.5 et 20% en masse du premier élastomère diénique.

5. Pneumatique selon l'une quelconque des revendications 1 à 4, dans lequel la composition de caoutchouc comprend en outre un second élastomère, de préférence diénique.

6. Pneumatique selon la revendication 5 dans lequel le second élastomère est un élastomère diénique fortement insaturé choisi dans le groupe constitué par les polybutadiènes, les polyisoprènes, les copolymères de butadiène, les copolymères d'isoprène et les mélanges de ces élastomères.

7. Pneumatique selon l'une quelconque des revendications 1 à 6 dans lequel le taux du premier élastomère diénique dans la composition de caoutchouc est plus de 50 pce, de préférence plus de 60 pce.

8. Pneumatique selon l'une quelconque des revendications 1 à 4, dans lequel le premier élastomère diénique est le seul élastomère de la composition de caoutchouc.

9. Pneumatique selon l'une quelconque des revendications 1 à 8 dans lequel la charge renforçante comprend un noir de carbone.

10. Pneumatique selon la revendication 9 dans lequel la charge renforçante est constituée à 100% en masse d'un noir de carbone.

11. Pneumatique selon l'une quelconque des revendications 1 à 9 dans lequel la charge renforçante comprend une charge inorganique, de préférence une silice.

12. Pneumatique selon l'une quelconque des revendications 1 à 11 dans lequel le taux de charge renforçante est de 20 à 70 pce, de préférence de 25 à 50 pce.

13. Pneumatique selon l'une quelconque des revendications 1 à 12 dans lequel la composition de caoutchouc contient 0 à 20 pce d'un plastifiant liquide.

14. Pneumatique selon la revendication 13 dans lequel le taux de plastifiant liquide est égal à 0.

## Patentansprüche

1. Flugzeugreifen, dessen Lauffläche eine Kautschukzusammensetzung auf Basis von mindestens einem ersten Dienelastomer, einen Verstärkungsfüllstoff und ein Vernetzungssystem umfasst, wobei das erste Dienelastomer ein Terpolymer aus Ethylen, einem α-Olefin und einem nicht konjugierten Dien ist.

2. Reifen nach Anspruch 1, wobei das α-Olefin Propylen ist.

3. Reifen nach Anspruch 1 oder 2, wobei das nicht konjugierte Dien 5-Ethyliden-2-norbornen oder Dicyclopentadien ist.

4. Reifen nach einem der Ansprüche 1 bis 3, wobei das erste Dienelastomer mindestens eine der folgenden, vorzugsweise alle Eigenschaften aufweist:
- die Ethyleneinheiten machen zwischen 20 und 90%, vorzugsweise zwischen 30 und 70 Gewichts-% des ersten Dienelastomers aus,
- die α-Olefineinheiten machen zwischen 10 und 80%, vorzugsweise 15 bis 70 Gewichts-% des ersten Dienelastomers aus,
- die nicht konjugierten Dieneinheiten machen zwischen 0,5 und 20 Gewichts-% des ersten Dienelastomers aus.

5. Reifen nach einem der Ansprüche 1 bis 4, wobei die Kautschukzusammensetzung ferner ein zweites Elastomer, vorzugsweise ein Dienelastomer, umfasst.

6. Reifen nach Anspruch 5, wobei das zweite Elastomer ein stark ungesättigtes Dienelastomer ist, das aus der Gruppe ausgewählt ist bestehend aus Polybutadienen, Polyisoprenen, Butadien-Copolymeren, Isopren-Copolymeren und Mischungen aus diesen Elastomeren.

7. Reifen nach einem der Ansprüche 1 bis 6, wobei der Anteil des ersten Dienelastomers in der Kautschukzusammensetzung über 50 phr, vorzugsweise über 60 phr beträgt.

8. Reifen nach einem der Ansprüche 1 bis 4, wobei das erste Dienelastomer das einzige Elastomer der Kautschukzusammensetzung ist.

9. Reifen nach einem der Ansprüche 1 bis 8, wobei der Verstärkungsfüllstoff einen Ruß umfasst.

10. Reifen nach Anspruch 9, wobei der Verstärkungsfüllstoff aus 100 Gewichts-% eines Rußes besteht.

11. Reifen nach einem der Ansprüche 1 bis 9, wobei der Verstärkungsfüllstoff einen anorganischen Füllstoff, vorzugsweise Siliciumdioxid, umfasst.

12. Reifen nach einem der Ansprüche 1 bis 11, wobei der Anteil des Verstärkungsfüllstoffs 20 bis 70 phr, vorzugsweise 25 bis 50 phr beträgt.

13. Reifen nach einem der Ansprüche 1 bis 12, wobei die Kautschukzusammensetzung 0 bis 20 phr eines flüssigen Weichmachers enthält.

14. Reifen nach Anspruch 13, wobei der Anteil des flüssigen Weichmachers 0 beträgt.

## Claims

1. Aircraft tyre, the tread of which comprises a rubber composition based on at least one first diene elastomer, a reinforcing filler and a crosslinking system, which first diene elastomer is a terpolymer of ethylene, of an α-olefin and of a non-conjugated diene.

2. Tyre according to Claim 1, in which the α-olefin is propylene.

3. Tyre according to either one of Claims 1 and 2, in which the non-conjugated diene is 5-ethylidene-2-norbornene or dicyclopentadiene.

4. Tyre according to any one of Claims 1 to 3, in which the first diene elastomer exhibits at least one and preferably all of the following characteristics:
- the ethylene units represent between 20 and 90%, preferably between 30 and 70%, by weight of the first diene elastomer,
- the α-olefin units represent between 10 and 80%, preferably from 15 to 70%, by weight of the first diene elastomer,
- the non-conjugated diene units represent between 0.5 and 20% by weight of the first diene elastomer.

5. Tyre according to any one of Claims 1 to 4, in which the rubber composition additionally comprises a second elastomer, preferably a diene elastomer.

6. Tyre according to Claim 5, in which the second elastomer is a highly unsaturated diene elastomer selected from the group consisting of polybutadienes, polyisoprenes, butadiene copolymers, isoprene copolymers and the mixtures of these elastomers.

7. Tyre according to any one of Claims 1 to 6, in which the content of the first diene elastomer in the rubber composition is more than 50 phr, preferably more than 60 phr.

8. Tyre according to any one of Claims 1 to 4, in which the first diene elastomer is the only elastomer of the rubber composition.

9. Tyre according to any one of Claims 1 to 8, in which the reinforcing filler comprises a carbon black.

10. Tyre according to Claim 9, in which the reinforcing filler is formed to 100% by weight of a carbon black.

11. Tyre according to any one of Claims 1 to 9, in which the reinforcing filler comprises an inorganic filler, preferably a silica.

12. Tyre according to any one of Claims 1 to 11, in which the content of reinforcing filler is from 20 to 70 phr, preferably from 25 to 50 phr.

13. Tyre according to any one of Claims 1 to 12, in which the rubber composition contains from 0 to 20 phr of a liquid plasticizer.

14. Tyre according to Claim 13, in which the content of liquid plasticizer is equal to 0.
